# EUROPÄISCHE PATENTSCHRIFT

(11) **EP 3 658 402 B1**
(45) Veröffentlichungstag und Bekanntmachung des Hinweises auf die Patenterteilung: **12.05.2021**
(21) Anmeldenummer: 18746124.9
(22) Anmeldetag: 19.07.2018
(51) Int. Cl.: B60K 35/00, H04N 13/395

(54) **ANZEIGEVORRICHTUNG FÜR EIN KRAFTFAHRZEUG, VERFAHREN ZUM BETREIBEN EINER ANZEIGEVORRICHTUNG, STEUEREINRICHTUNG, UND KRAFTFAHRZEUG**
DISPLAY DEVICE FOR A MOTOR VEHICLE, METHOD FOR OPERATING A DISPLAY DEVICE, CONTROL UNIT, AND MOTOR VEHICLE
DISPOSITIF D'AFFICHAGE POUR UN VÉHICULE AUTOMOBILE, PROCÉDÉ SERVANT À FAIRE FONCTIONNER UN DISPOSITIF D'AFFICHAGE, SYSTÈME DE COMMANDE ET VÉHICULE AUTOMOBILE

(30) Priorität: 27.07.2017 DE 102017212912
(43) Veröffentlichungstag der Anmeldung: 03.06.2020
(73) Patentinhaber: Audi AG, 85045 Ingolstadt (DE)
(72) Erfinder: HÉLOT, Jacques, 85051 Ingolstadt (DE)
(86) Internationale Anmeldenummer: PCT/EP2018/069571
(87) Internationale Veröffentlichungsnummer: WO 2019/020476

(56) Entgegenhaltungen:
- WO-A2-2009/138066
- DE-T5-112015 004 066
- US-A1- 2006 158 740

## Beschreibung

Die Erfindung betrifft eine Anzeigevorrichtung für ein Kraftfahrzeug mit mehreren Anzeigeelementen, die in verschiedenen Anzeigeebenen der Anzeigevorrichtung angeordnet sind.

Mit zunehmender Anzahl an Betriebsfunktionen, Fahrerassistenzfunktionen und Komfortfunktionen sind in Kraftfahrzeugen Benutzerschnittstellen gefragt, die einerseits eine einfache Bedienung dieser Funktionen ermöglichen, andererseits eine Vielzahl von unterschiedlichen Informationen übersichtlich präsentieren. Moderne Kraftfahrzeuge verfügen über eine Anzeigevorrichtung, also über ein Gerät oder eine Gerätekomponente zum Anzeigen von Anzeigeinhalten oder Bildinhalten. Solche Anzeigevorrichtungen sind vorzugsweise als Bildschirm eines Kombiinstruments oder als Bildschirm in einer Mittelkonsole ausgestaltet.

Die DE 10 2014 019 122 A1 beschreibt ein Verfahren zum Betreiben eines Anzeigesystems eines Kraftwagens, bei welchem mittels einer Anzeigeeinrichtung unter Vermittlung einer Spiegelanordnung ein erstes Objekt und ein zweites Objekt in zwei hintereinander angeordneten, virtuellen Bildebenen angezeigt werden. Eine solche Spiegelkombination bewirkt eine Transparenz mit mehreren in der Tiefe gelagerten Bildern. Eine weitere Spiegelkombination ist durch die DE 10 2014 016 324 A1 beschrieben.

Bei Spiegelkombinationen ergibt sich der Nachteil, dass diese relativ viel Bauraum erfordern, zum Beispiel in einer X- und/oder Z-Messkette einer Instrumententafel. Die Darstellungsebenen überlagern sich, sodass eine angezeigte Grafik teilweise unklar oder unscharf sein kann.

Die US 2009/132130 A1 beschreibt einen Bildschirm eines Kraftfahrzeugs mit einem Bildanzeigegerät und einem transparenten Bildschirmeingabegerät.

Andere technische Lösungen sehen hintereinander gelagerte transparente Bildschirme vor. Dabei überlagern sich jedoch die Darstellungsebenen, so dass eine Grafik teilweise unklar oder unscharf sein kann.

Die WO2009138066A2 offenbart eine Anordnung zweier Displays hintereinander, wobei sich zwischen den Displays ein Flüssigkristallbildschirm befindet.

Eine der Erfindung zu Grunde liegende Aufgabe ist das Verbessern einer Sichtbarkeit von angezeigten Informationen.

Die gestellte Aufgabe wird durch die erfindungsgemäßen Vorrichtungen und das erfindungsgemäße Verfahren der nebengeordneten Patentansprüche gelöst. Vorteilhafte Weiterbildungen ergeben sich durch die Unteransprüche.

Die Erfindung basiert auf die Idee, mehrere flächig ausgestaltete Anzeigeelemente sandwich-artig anzuordnen, wobei zumindest diejenigen Anzeigeelemente, die einem abschließenden, aus einer Sichtrichtung des Benutzers rückwärtig, also abgewandt liegenden Anzeigeelement vorangestellt oder vorgelagert sind, eine transparente Anzeigefläche aufweisen, und zusätzlich jeweils ein Sichtschutzelement aufweisen, wobei das Sichtschutzelement dazu eingerichtet ist, in Abhängigkeit von einem Steuersignal einer Steuereinrichtung einen Grad einer Transparenz und/oder einer Opazität zu ändern, und damit eine Transparenz oder Opazität zumindest eines Teilbereichs des Anzeigeelements zu ändern. Als Anzeigefläche wird dabei ein Bauteil zum Anzeigen eines Bild- oder Anzeigeinhaltes verstanden, beispielsweise ein Bildschirm.

Mit anderen Worten basiert die Erfindung auf der Idee, eine Anzeigevorrichtung mit einer Kombination mehrerer Anzeigeelemente bereitzustellen, wobei die genannten vorgelagerten Anzeigeelemente jeweils eine transparente Anzeigefläche und jeweils ein Sichtschutzelement aufweisen, und wobei das jeweilige Anzeigeelement je nach Bedarf vollständig oder bereichsweise undurchsichtig, also opak, oder transparent geschaltet werden kann. Eine solche Anzeigevorrichtung ist besonders platzsparend. Eine Ablesbarkeit von Anzeigeinhalten ist dadurch sehr gut möglich, da Anzeigeinhalte, beispielsweise Grafiken, die in einer hinteren Anzeigeebene angezeigt werden, durch das schaltbare Sichtschutzelement eines vorgelagerten Anzeigeelements verdeckt werden können. Es ergibt sich eine perspektivische Tiefenwirkung und angezeigte Informationen können so sehr viel besser abgelesen werden. Hierdurch ergibt sich auch eine erhöhte Fahrsicherheit, da der Benutzer die Information schneller erfasst.

Die Überlagerung der Schichten, also der Anzeigeelemente, wird möglich, indem das Sichtschutzelement vollständig oder bereichsweise (also segmentweise) transparent geschaltet werden kann. Durch die erfindungsgemäßen Vorrichtungen und das erfindungsgemäße Verfahren ergibt sich eine erhöhte Flexibilität, denn zum Beispiel mehrere Grafiken können sich so in der Tiefe überlagern, wo es für die Tiefenwirkung gewünscht ist, und nicht überlagert werden, wo es für die Ablesbarkeit notwendig ist (beispielsweise ein blauer Kreis mit einer Information zu einer Drehzahl des Motors, zu einem eingelegten Gang und/oder einer aktuellen Geschwindigkeit in einem entsprechenden Bild). Eine dreidimensionale Kombination von Anzeigeebenen kann zu einer zweidimensionalen Kombination werden, indem das schaltbare Sichtschutzelement beispielsweise eines vorderen Anzeigeelements auf undurchsichtig geschaltet wird.

Die erfindungsgemäße Anzeigevorrichtung für das Kraftfahrzeug weist ein erstes, flächiges Anzeigeelement auf, das in einer ersten Anzeigeebene der Anzeigevorrichtung angeordnet ist. Die Anzeigevorrichtung weist außerdem mindestens ein weiteres, flächiges Anzeigeelement auf, das jeweils in einer weiteren Anzeigeebene der Anzeigevorrichtung angeordnet und in einer Sichtrichtung eines Benutzers des Kraftfahrzeugs dem ersten Anzeigeelement vorgelagert angeordnet ist. Mit anderen Worten überlagert die jeweilige weitere Anzeigeebene die erste Anzeigeebene, das heißt das mindestens eine weitere Anzeigeelement überlagert das erste Anzeigeelement. Jede der Anzeigeelemente liegt also in einer anderen Anzeigeebene, wodurch in den mehreren Anzeigeebenen jeweils ein Anzeigeinhalt angezeigt werden kann. Als Sichtrichtung wird dabei diejenige Richtung verstanden, in der ein Benutzer des Kraftfahrzeugs auf die Anzeigevorrichtung sieht, um angezeigte Informationen zu sehen. Vorzugsweise kann diese Sichtrichtung in einem im Kraftfahrzeug verbauten Zustand der Anzeigevorrichtung in einer Kraftfahrzeug-Längsachse liegen ("X-Achse"), und vorzugsweise in Fahrtrichtung verlaufen.

Die Anzeigevorrichtung ist dadurch gekennzeichnet, dass das mindestens eine weitere Anzeigeelement mit dem ersten Anzeigeelement eine mehrschichtige Kombination an Anzeigeelementen bildet, und dass das mindestens eine weitere Anzeigeelement jeweils eine zumindest teilweise transparente Anzeigefläche und jeweils ein Sichtschutzelement aufweist, das an der Anzeigefläche angeordnet und dazu eingerichtet ist, in Abhängigkeit von einem Steuersignal einer Steuereinrichtung einen Grad einer Transparenz und/oder ein Grad einer Opazität einzustellen. Das Sichtschutzelement ist dabei flächig an der Anzeigefläche angeordnet.

Mit anderen Worten kann das Sichtschutzelement eine Sicht auf ein weiteres, dahinter oder darunter liegendes Anzeigeelement zumindest teilweise verdecken und/oder freigeben. Mit anderen Worten kann das Sichtschutzelement ganzflächig oder segmentweise eine Transparenz oder Opazität ändern, und damit eine Transparenz oder Opazität zumindest eines Teilbereichs des Anzeigeelements in Bezug auf eine Sichtbarkeit eines darunter oder dahinter liegenden Anzeigeelements.

Es ergeben sich die oben genannten Vorteile.

Vorzugsweise kann dabei das jeweilige Sichtschutzelement in Sichtrichtung hinter oder - je nach Orientierung im Kraftfahrzeug - unter der jeweiligen Anzeigefläche angeordnet sein. Wechselt das Sichtschutzelement beispielsweise von einem transparenten Zustand in einen opaken Zustand, so kann ein von der dazugehörigen Anzeigefläche des Anzeigeelements ausgegebener Anzeigeinhalt vom Benutzer gesehen werden, während ein Anzeigeinhalt eines weiter hinten oder unten liegenden Anzeigeelements nicht mehr erkennbar ist. Wird nur ein Teilbereich des Sichtschutzelements auf opak umgestellt, so können Anzeigeinhalte beider Anzeigeelemente gesehen werden, mit Ausnahme eines Anzeigeinhaltes, der von dem nachfolgenden Anzeigeelement ausgegeben wird und von dem opak geschalteten Teilbereich verdeckt wird. Hierdurch kann ein sehr plastischer, dreidimensionaler Effekt einer Kombination von Anzeigeinhalten verschiedener Anzeigeebenen erzeugt werden. Außerdem können so unterschiedliche Anzeigeinhalte, zum Beispiel relevante Grafiken, situationsbedingt mit besonders scharfen Konturen hervorgehoben werden.

Vorzugsweise kann das Sichtschutzelement dazu eingerichtet sein, zwischen einem transparenten Zustand und einem opaken Zustand zu wechseln, d.h. zwischen einem volltransparenten Zustand und einem vollopaken Zustand. Insbesondere die bessere Lesbarkeit der angezeigten, sichtbaren Grafiken wird dadurch noch einmal deutlich erhöht. In dem volltransparenten Zustand wird der 3D-Effekt besonders wirksam erreicht.

Das Sichtschutzelement ist erfindungsgemäß als schaltbare Folie ausgestaltet. Ein solches Sichtschutzelement kann einfach an einer Anzeigefläche angeordnet werden, beispielsweise durch Laminieren oder Aufkleben. Eine solche Anzeigevorrichtung ist besonders bauraumsparend und auf kleinstem Raum können mit hochentwickelter Technologie der 3D-Effekt und die weiteren, oben genannten Vorteile ermöglicht werden. Außerdem wird eine Transparenz des mindestens einen, weiteren Anzeigeelements nur geringfügig durch beispielsweise Leiterbahnen des Sichtschutzelements beeinträchtigt.

Zu Koordination einer besonders großen Vielfalt an Anzeigeinhalten oder Bildelementen kann, gemäß einer weiteren Ausführungsform der erfindungsgemäßen Anzeigevorrichtung, diese mindestens zwei weitere Anzeigeelemente aufweisen.

Die oben gestellte Aufgabe wird gelöst durch ein Verfahren zum Betreiben einer Anzeigevorrichtung nach einer der oben beschriebenen Ausführungsformen, das Verfahren gekennzeichnet durch die folgenden, durch eine Steuereinrichtung durchgeführten Schritte. Unter einer Steuereinrichtung wird dabei ein Gerät oder eine Gerätekomponente zum Empfangen und Auswerten von Signalen, sowie zum Erzeugen von Steuersignalen verstanden. Die Steuereinrichtung kann beispielsweise als Steuerchip oder Steuergerät ausgestaltet sein und kann vorzugsweise eine Komponente der Anzeigeeinrichtung sein.

Das Verfahren umfasst zunächst den Schritt des Erzeugens eines Bildsteuersignals, das ein Bild mit mindestens zwei Bildelementen oder Anzeigeinhalten beschreibt, wobei eines der mindestens zwei Bildelemente oder Anzeigeinhalte durch eines der Anzeigeelemente anzuzeigen ist, und wobei ein anderes der mindestens zwei Bildelemente oder Anzeigeinhalte durch ein anderes der Anzeigeelemente anzuzeigen ist. In Abhängigkeit von dem erzeugten Bildsteuersignal erfolgt ein Einstellen eines Transparenzgrades oder eines Opazitätsgrades mindestens eines Sichtschutzelements, das vorzugsweise jeweils eine Größe eines Pixels haben oder einnehmen kann, also auf Pixelniveau sein kann, und ein Ausgeben des Bildsteuersignals, und dadurch Anzeigen des jeweiligen Bildelements auf dem jeweiligen Anzeigeelement und Einstellen einer Transparenz oder Opazität des mindestens einen Sichtschutzelements. Es ergeben sich die oben genannten Vorteile.

Die oben gestellte Aufgabe wird gelöst durch eine Steuereinrichtung, die dadurch gekennzeichnet ist, dass sie dazu eingerichtet ist, eine Ausführungsform des erfindungsgemäßen Verfahrens durchzuführen. Die Steuereinrichtung kann vorzugsweise eine Prozessoreinrichtung aufweisen, also ein Gerätekomponente oder ein Bauteil zur elektronischen Datenverarbeitung, wobei die Prozessoreinrichtung vorzugsweise mindestens einen Mikrokontroller und/oder mindestens einen Mikroprozessor aufweisen kann. Die Prozessoreinrichtung kann dazu eingerichtet sein, einen Programmcode auszuführen, wobei der Programmcode auf einem Datenspeicher gespeichert und dazu eingerichtet sein kann, bei Ausführen durch die Prozessoreinrichtung die Steuereinrichtung dazu zu veranlassen, das erfindungsgemäße Verfahren durchzuführen. Es ergeben sich die oben genannten Vorteile.

Die oben gestellte Aufgabe wird ebenfalls gelöst durch eine oben beschriebene Ausführungsform der erfindungsgemäßen Anzeigevorrichtung, die durch eine Ausführungsform der erfindungsgemäßen Steuereinrichtung gekennzeichnet ist. Auch hier ergeben sich die oben genannten Vorteile.

Die gestellte Aufgabe wird gelöst durch ein Kraftfahrzeug, das vorzugsweise als Kraftwagen, beispielsweise als Personenkraftwagen, ausgestaltet sein kann, wobei das Kraftfahrzeug eine Ausführungsform der erfindungsgemäßen Anzeigevorrichtung und/oder eine Ausführungsform der erfindungsgemäßen Steuereinrichtung aufweist. Auch hier ergeben sich die bereits genannten Vorteile.

Im Folgenden sind Ausführungsbeispiele der Erfindung beschrieben. Hierzu zeigt:
- Fig. 1: eine schematische Darstellung zu einer ersten Ausführungsform der erfindungsgemäßen Anzeigevorrichtung und zu einer ersten Ausführungsform des erfindungsgemäßen Verfahrens;
- Fig. 2: eine schematische Darstellung zu einer weiteren Ausführungsform der erfindungsgemäßen Anzeigevorrichtung;
- Fig. 3: eine schematische Darstellung zu einer weiteren Ausführungsform der erfindungsgemäßen Anzeigevorrichtung;
- Fig. 4: eine schematische Darstellung zu einer weiteren Ausführungsform der erfindungsgemäßen Anzeigevorrichtung;
- Fig. 5: eine schematische Darstellung zu einer weiteren Ausführungsform der erfindungsgemäßen Anzeigevorrichtung; und
- Fig. 6: eine schematische Darstellung zu einer weiteren Ausführungsform der erfindungsgemäßen Anzeigevorrichtung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

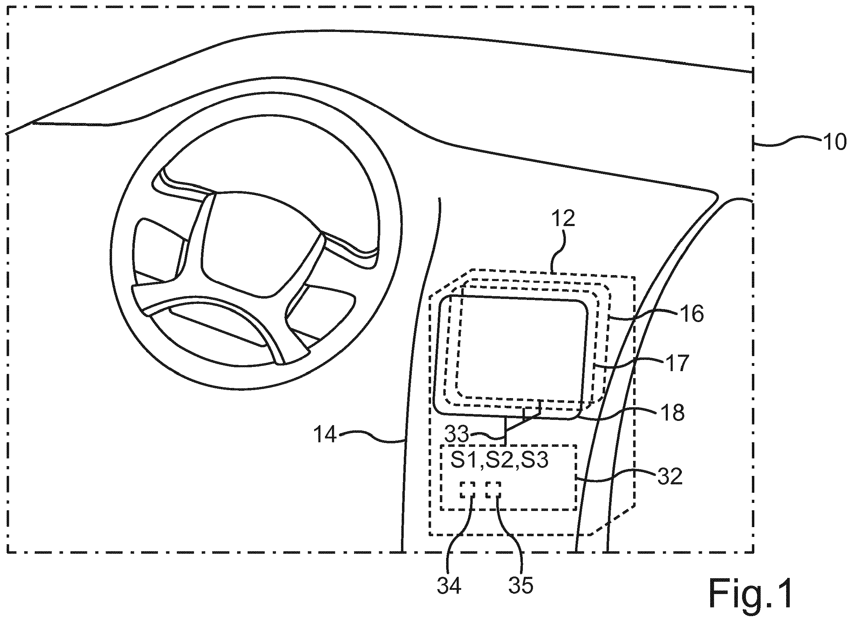

Die Fig. 1 veranschaulicht das Prinzip der erfindungsgemäßen Anzeigevorrichtung anhand eines ersten Ausführungsbeispiels. Hierzu zeigt die Fig. 1 ein Kraftfahrzeug 10, das beispielsweise als Personenkraftwagen ausgestaltet sein kann. Ein erstes Ausführungsbeispiel der erfindungsgemäßen Anzeigevorrichtung 12 kann beispielhaft in einer Mittelkonsole 14 oder in einem Kombiinstrument des Kraftfahrzeugs 10 eingebaut sein, oder in einem Armaturenbrett.

Die Anzeigevorrichtung 12 weist dabei beispielsweise drei flächige Anzeigeelemente 16, 17, 18 auf. Ein erstes Anzeigeelement 16 kann beispielsweise undurchsichtig und aus Sicht des Benutzers hinten angeordnet sein, d.h. in einer rückwärtigen, die Kombination der Anzeigeelemente 16, 17, 18 in Sichtrichtung abschließenden Anzeigeebene, angeordnet sein. Dieses erste Anzeigeelement 16 kann zum Beispiel als dem Fachmann aus dem Stand der Technik bekannter Bildschirm ausgestaltet sein, beispielsweise als OLED-Bildschirm oder TFT-Bildschirm.

Das erste Anzeigeelement 16 im Beispiel der Fig. 1 kann zum Beispiel von zwei weiteren, transparenten Anzeigeelementen 17, 18 überlagert, vorzugsweise deckungsgleich überlagert werden. Diese können dabei beispielsweise jeweils als OLED-Bildschirm ausgestaltet sein.

In der Fig. 1 ist dabei die sandwich-artige Schichtung der Anzeigeelemente 16, 17, 18 schematisch gezeigt, wobei zur besseren Veranschaulichung die einzelnen Anzeigeelemente 16, 17, 18 deutlich voneinander beabstandet dargestellt sind. Die Anzeigeelemente 16, 17, 18 können tatsächlich jedoch dicht oder eng beieinander liegen, oder aufeinander aufliegen.

Die jeweiligen Anzeigeflächen der weiteren Anzeigeelemente 17, 18 sind dabei zumindest teilweise transparent, mit anderen Worten weist dabei jedes der weiteren Anzeigeelemente 17, 18 mindestens einen transparenten Bereich der jeweiligen Anzeigefläche auf. Transparente Anzeigeflächen sind dem Fachmann zum Beispiel als Flüssigkristall-Bildschirme bekannt.

Jedes der Anzeigeelemente 17, 18 weist dabei jeweils ein Sichtschutzelement 20 auf, das als schaltbare Folie ausgestaltet ist. Die weiteren Anzeigeelemente 17, 18 der Fig. 1 weisen jeweils ein solches Sichtschutzelement 20 auf, das aus Gründen der Übersichtlichkeit in der Fig. 1 nicht gezeigt ist.

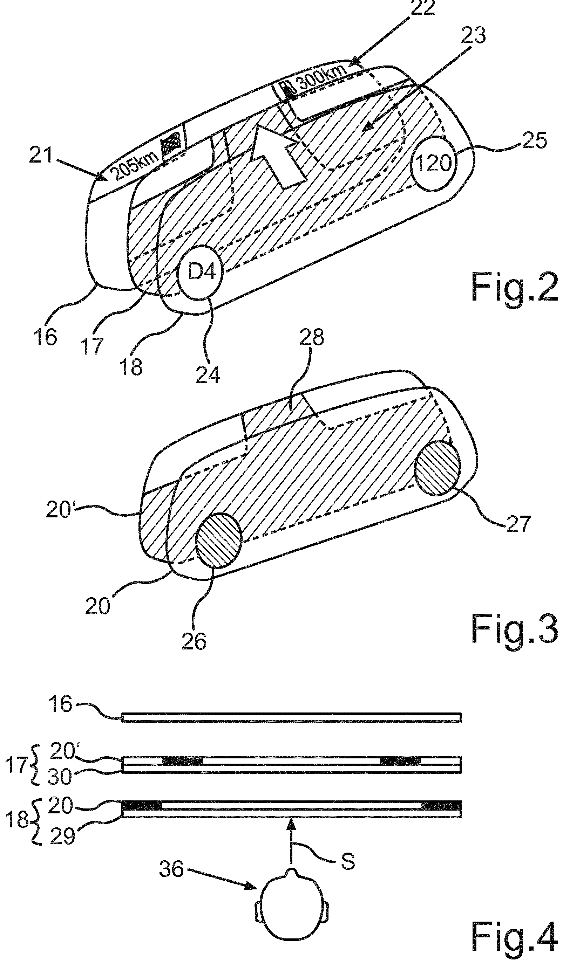

Der detaillierte Aufbau der Kombination der Anzeigeelemente 16, 17, 18, die beispielsweise in einer Anzeigevorrichtung 10 eines Kombiinstruments angeordnet sein könnnen, ist in der Fig. 2 gezeigt, wobei beispielhaft das erste Anzeigeelement 16, das von den weiteren Anzeigeelementen 17, 18 überlagert ist, zwei Anzeigebereiche 21, 22 zum Anzeigen von Bild- oder Anzeigeinhalten aufweisen kann, und kann beispielsweise in einer linken, oberen Ecke eine verbleibende Strecke einer Reiseroute ("205 km") und in einer rechten oberen Ecke eine Reichweite einer aktuellen Tankfüllung ("300 km") anzeigen.

Aus Gründen der Übersichtlichkeit sind in der Fig. 2, Fig. 3, Fig. 4, und Fig. 5 nur die Anzeigeelemente 16, 17, 18 gezeigt. Diese können jedoch beispielhaft Bestandteile der in der Fig. 1 gezeigten Anzeigevorrichtung 12 sein.

Durch das das erste Anzeigeelement 16 überlagernde Anzeigeelement 17 kann beispielsweise ein Anzeigebereich 23 die Anzeigebereiche 21, 22 aussparen und beispielsweise einen perspektivisch dargestellten Verlauf einer Fahrtroute mit beispielsweise einem Fahrtrichtungspfeil anzeigen.

Das weitere Anzeigeelement 18, das im Beispiel der Fig. 2 den weiteren Anzeigeelemente 16, 17 überlagernd angeordnet sein kann, weist beispielsweise zwei Anzeigebereiche 24, 25 auf, die beispielsweise eine aktuelle Schaltstufe ("D4") und eine aktuelle Geschwindigkeit ("120") des Kraftfahrzeugs 10 anzeigen können.

Bei Anlegen einer Spannung kann beispielsweise ein Umschalten von transparent auf halbtransparent oder von transparent auf opak erfolgen.

Die Fig. 3 zeigte beispielhaft ein Sichtschutzelement 20 des in der Fig. 2 gezeigten Anzeigeelements 18 und ein Sichtschutzelement 20' des in der Fig. 2 gezeigten Anzeigeelements 17. Das Sichtschutzelement 20 kann zum Beispiel zwei Segmente 26, 27 aufweisen, die in der Anordnung mit dem Anzeigeelement 18 den entsprechenden Anzeigefelder 24, 25 entsprechen können. Im Beispiel der Fig. 3 können die Bereiche oder Segmente 26, 27 opak geschaltet sein. Analog hierzu kann ein Segment 28 des Sichtschutzelements 20', das an dem Anzeigeelemente 17 der Fig. 2 angeordnet sein kann, ebenfalls opak oder halbopak geschaltet sein. Dabei kann das Segment 28 dem entsprechenden Anzeigebereich 23 des Anzeigeelements 17 entsprechen.

Die Fig. 4 zeigt, in einer Aufsicht, noch einmal die schichtartige Anordnung der Anzeigeelemente 16, 17, 18, wobei die jeweiligen Anzeigeelemente 17, 18 jeweils ein beispielhaft geschaltetes Sichtschutzelement 20, 20' und jeweils eine Anzeigefläche 29, 30 aufweisen können. Ein Insasse 36 schaut exemplarisch in der Sichtrichtung S auf die Anordnung der Anzeigeelemente 16, 17, 18 einer beispielhaften Anzeigevorrichtung 12, deren weiteren Bestandteile aus Gründen der Übersichtlichkeit in der Fig. 4 nicht gezeigt sind. Mit anderen Worten kann hinter jeder der transparenten Anzeigeflächen 17, 18 beispielsweise eine segmentiert schaltbare Folie als Sichtschutzelement 20, 20' angeordnet sein, die zum Beispiel segmentweise transparent und/oder schwarz geschaltet werden kann.

Alternativ zu der Ausführung der beschriebenen Beispiele kann ein weiteres Anzeigeelement 17, 18 einstückig als schaltbare Anzeigefläche 29, 30 ausgestaltet sein, beispielsweise als Bildschirm aus "intelligentem Glas". Mit anderen Worten kann das jeweilige Sichtschutzelement 29, 30 in eine Anzeigefläche 17, 18 integriert und zum Beispiel als Schaltung zum Einstellen des Transparenzgrades ausgestaltet sein.

Ein Segment 26, 27, 28 kann beispielsweise eine Vielzahl von Schaltelementen aufweisen, die, vergleichbar zu Pixelelementen, in einer Pixelgröße dimensioniert sein und unabhängig voneinander geschaltet werden können. Ein Sichtschutzelement 20, 20' kann optional für verschiedene Segmente oder Schaltelemente Leitungen zum Übertragen der Spannung aufweisen, wobei die Leitungen zumindest teilweise transparent ausgestaltet sein können, um eine Transparenz des Segmentes möglichst wenig zu beeinträchtigen. Erreicht das als Folie ausgestaltete Sichtschutzelement 20, 20' beispielsweise eine maximale Transparenz von 50 %, so kann bei zwei übereinandergelegten Anzeigeelementen 17, 18 zum Beispiel eine Gesamt-Transparenz von beispielsweise 25 % erfolgen. Um eine solche, durch etwaige Leitungen des Sichtschutzelements 20, 20' reduzierte maximale Gesamt-Transparenz zu kompensieren, kann beispielsweise vorgesehen sein, dass das erste Anzeigeelement 16 derart eingerichtet und konfiguriert sein kann, dass Bildinhalte in möglichst hellen und kräftigen Farben ausgegeben werden können.

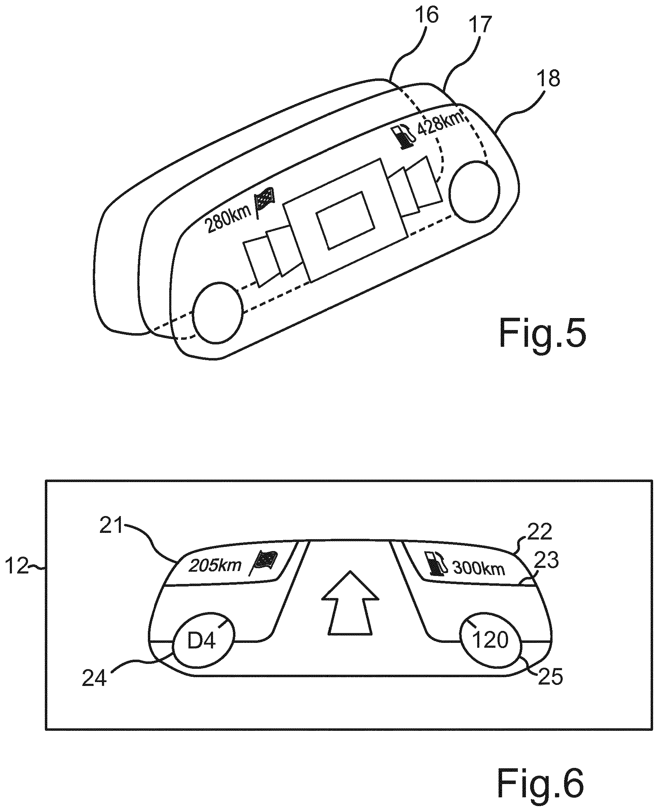

Durch die - wie in der Fig. 3 gezeigt - opak geschalteten Segmente 26, 27 können im Bereich der Anzeigefelder 24, 25 des weiteren Anzeigeelements 18 nur die Bildinhalte der Anzeigefelder 24, 25 des Anzeigeelements 18 für den Benutzer sichtbar sein, da entsprechende Bereiche unter dem Anzeigeelement 18 verdeckt werden. Analog kann das durch die Anzeigeelemente 17 angezeigte Bild im Anzeigebereich 23 sichtbar sein, ein entsprechender Bereich des Anzeigeelements 16 jedoch nicht. Durch die Bereiche oder Segmente, die in den Sichtschutzelementen 20, 20' weiterhin transparent geschaltet sind, ergibt sich für den Benutzer die in der Fig. 6 gezeigte Gesamtansicht mit einer Tiefenwirkung, in der der Benutzer die Anzeigebereiche 24, 25 des Anzeigeelements 18, den Anzeigebereich 23 des Anzeigeelements 17, und die Anzeigebereiche 21, 22 des Anzeigeelements 16 deutlich und scharf sehen kann. Die Gesamtansicht veranschaulicht die Vorteile der Anzeigevorrichtung 12, vor allem eine gute Tiefenwirkung und eine bessere Lesbarkeit des angezeigten Bildinhalts.

Die Fig. 5 zeigt ein weiteres Ausführungsbeispiel, bei dem beispielsweise ein Sichtschutzelement 20 des weiteren, die anderen Anzeigeelemente 16, 17 überlagernden Anzeigeelements 18 vollständig oder komplett auf nichttransparent, also opak, geschaltet sein kann, weil beispielsweise das Anzeigeelement 18 vollflächig die dargestellten Grafiken oder Bildelemente oder Anzeigeinhalte ausgeben kann. Etwaige, durch die weiteren Anzeigeelemente 16, 17 ausgegebenen Bildinhalte können dann nicht sichtbar sein.

Ein Steuern der Anzeigeelemente 16, 17, 18, also ein Steuern der Ausgabe von Bildinhalten oder Anzeigeinhalten durch die jeweilige Anzeigefläche und ein Steuern oder Schalten der jeweiligen Sichtschutzelemente 20, 20', kann beispielhaft durch eine Steuereinrichtung 32 erfolgen, die im Beispiel der Fig. 1 als Steuereinrichtung 32 der Anzeigevorrichtung 12 dargestellt ist.

Alternativ kann die Steuereinrichtung 32 zum Beispiel ein Steuergerät oder eine Steuerplatine des Kraftfahrzeugs 10 sein, das/die baulich von der Anzeigevorrichtung 12 getrennt angeordnet sein kann, und beispielsweise ein Bauteil eines Infotainmentsystems oder eines Bordcomputers des Kraftfahrzeugs 10 sein kann. Die Steuereinrichtung 32 ist durch eine Datenkommunikationsverbindung 33 mit den einzelnen Anzeigeelementen 16, 17, 18 verbunden. Die Datenkommunikationsverbindung 33 kann beispielsweise eine drahtlose Datenkommunikationverbindung 33 sein, beispielsweise eine WLAN- oder Bluetooth-Verbindung, alternativ eine drahtgebundene Datenkommunikationsverbindung 33, beispielsweise ein Datenbus eines Datenbussystems.

Die Steuereinrichtung 32 der Fig. 1 weist eine optionale Prozessoreinrichtung 34 auf, die beispielsweise mehrere Mikroprozessoren aufweisen kann. Die Steuereinrichtung 32 der Anzeigevorrichtung 12 der Fig. 1 weist ebenfalls einen optionalen Datenspeicher 35 auf, der beispielsweise als Speicherkarte oder Speicherchip ausgestaltet sein kann. Auf diesem optionalen Datenspeicher 35 kann beispielsweise ein Programmcode zum Durchführen des erfindungsgemäßen Verfahrens abgelegt sein.

Im Verfahrensschritt S1 erzeugt die Steuereinrichtung ein Bildsteuersignal, das zum Beispiel ein Bild mit mehreren Bildelementen oder Anzeigeinhalte, oder mehrere Bilder, beschreiben kann, sowie eine Zuordnung des entsprechenden Bildelements oder Anzeigeinhalts (oder Bildes) zu einem der Anzeigeelemente 16, 17, 18, sowie zu einem der Anzeigebereiche des jeweiligen Anzeigeelements 16, 17, 18.

Zusätzlich beschreibt das Bildsteuersignal die Schaltung des jeweiligen Sichtschutzelements 20, 20' der Anzeigeelemente 17, 18. Mit anderen Worten beschreibt das Bildsteuersignal einen einzustellenden Zustand des entsprechenden Sichtschutzelements 20, 20', das heißt eine einzustellende Transparenz oder Opazität, optional das entsprechende, zu schaltende Segment des Sichtschutzelements 20, 20'. In Abhängigkeit von dem erzeugten Bildsteuersignal erfolgt ein Einstellen eines Zustands des jeweiligen Sichtschutzelements 20, 20' durch Einstellen eines entsprechenden Transparenzgrades oder Opazitätgrades des jeweiligen Sichtschutzelements 20, 20', oder der Segmente 26, 27, 28 (S2). Zusätzlich erfolgt im Verfahrensschritt S3 das Ausgeben des Bildsteuersignals durch die Anzeigeelemente 16, 17, 18, wodurch das jeweilige Bildelement oder der jeweilige Anzeigeinhalt auf dem jeweiligen Anzeigeelemente 16, 17, 18 angezeigt wird. Die Segmente 26, 27, 28 können zum Beispiel, für eine maximale Flexibilität, auf Pixelniveau geschrumpft werden.

Mit anderen Worten beschreibt das Bildsteuersignal ein maßgeschneidertes Schalten des entsprechenden Sichtschutzelements 20, 20' und die Verteilung der Bildelemente oder Anzeigeinhalte auf die Anzeigeelemente 16, 17, 18. Es erfolgt also, mit anderen Worten, eine Orchestrierung der Anzeigeelemente 16, 17, 18.

Insgesamt veranschaulichen die Ausführungsbeispiele, wie Anzeigeelemente 16, 17, 18 bereitgestellt werden, die zum Beispiel segmentiert transparent geschaltet werden können.

Gemäß einem weiteren Ausführungsbeispiel können beispielsweise transparente Bildschirme ("Displays"), beispielsweise OLED-Bildschirme (vergleiche Anzeigeelemente 16, 17, 18 der Figuren), die zum Beispiel an einer Hinterseite mit jeweils einem als Folie ausgestalteten Sichtschutzelement 20, 20' versehen sein können, wobei die Sichtschutzelemente 20, 20' beispielsweise segmentiert wahlweise transparent und/oder auf undurchsichtig geschaltet werden können. Beispielhafte Sichtschutzelemente 20, 20' sind dem Fachmann aus dem Stand der Technik bekannt und werden beispielsweise von dem Unternehmen Gauzy bereitgestellt. Die beispielhaften schaltbaren Segmente 26, 27, 28 können zum Beispiel mit funktionalen Bereichen jeweils eines grafischen Benutzeroberflächen-Displays ("GUI-Display"), also der entsprechenden Anzeigeflächen 29, 30, übereinstimmen. Beispielsweise können mehrere solche Display-Sandwiches hintereinander positioniert werden, wobei ein Bild mit einer Tiefenwirkung entsteht, wenn/falls man gewisse oder alle Bereiche der schaltbaren Folie zum Beispiel auf transparent schaltet (siehe Fig. 2 bis Fig. 6). Es ergeben sich die oben genannten Vorteile. Eine 3D-Kombination kann beispielsweise zu einer 2D-Kombination werden, in dem eine schaltbare Schicht auf dem vorderen Display, also ein Sichtschutzelement 20 des Anzeigeelements 18, zum Beispiel auf undurchsichtig geschaltet wird (vergleiche Fig. 5).

## Patentansprüche

1. Anzeigevorrichtung (12) für ein Kraftfahrzeug (10), aufweisend:
- ein erstes, flächiges Anzeigeelement (16), das in einer ersten Anzeigeebene der Anzeigevorrichtung (12) angeordnet ist, und
- mindestens ein weiteres, flächiges Anzeigeelement (17,18), das jeweils in einer weiteren Anzeigeebene der Anzeigevorrichtung (12) angeordnet und in einer Sichtrichtung eines Benutzers dem ersten Anzeigeelement (16) vorgelagert angeordnet ist, wobei
- das mindestens eine weitere Anzeigeelement (17, 18) mit dem ersten Anzeigeelement (16) eine mehrschichtige Kombination an Anzeigeelementen (16, 17, 18) bildet, und
- das mindestens eine weitere Anzeigeelement (17, 18) jeweils eine zumindest teilweise transparente Anzeigefläche (29, 30) und jeweils ein Sichtschutzelement (20, 20') zum Einstellen eines Grads einer Transparenz mindestens eines Bereichs des Anzeigeelements (17, 18) aufweist, **dadurch gekennzeichnet, dass**
das Sichtschutzelement (20, 20') als schaltbare Folie ausgestaltet ist.

2. Anzeigevorrichtung (12) nach Anspruch 1, **dadurch gekennzeichnet, dass**
das jeweilige Sichtschutzelement (20, 20') in Sichtrichtung hinter oder unter der jeweiligen Anzeigefläche (29, 30) angeordnet ist.

3. Anzeigevorrichtung (12) nach einem der vorhergehenden Ansprüche,
**dadurch gekennzeichnet, dass**
das jeweilige Sichtschutzelement (20, 20') dazu eingerichtet ist, zwischen einem transparenten Zustand und einem opaken Zustand zu wechseln.

4. Anzeigevorrichtung (12) nach einem der vorhergehenden Ansprüche,
**dadurch gekennzeichnet, dass**
die Anzeigevorrichtung (12) mindestens zwei weitere Anzeigeelemente (17, 18) aufweist.

5. Verfahren zum Betreiben einer Anzeigevorrichtung (12) nach einem der Ansprüche 1 bis 4, das Verfahren **gekennzeichnet durch** die folgenden, durch eine Steuereinrichtung (32) durchgeführten Schritte:
- Erzeugen eines Bildsteuersignals (S1), das ein Bild mit mindestens zwei Bildelementen beschreibt, wobei eines der mindestens zwei Bildelemente durch eines der Anzeigeelemente (16) anzuzeigen ist, und wobei ein anderes der mindestens zwei Bildelemente durch ein anderes der Anzeigeelemente (17, 18) anzuzeigen ist,
- in Abhängigkeit von dem erzeugten Bildsteuersignal Einstellen eines Transparenzgrades mindestens eines Sichtschutzelements (20, 20', S2), und
- Ausgeben des Bildsteuersignals und dadurch Anzeigen des jeweiligen Bildelements auf dem jeweiligen Anzeigeelement und Einstellen einer Transparenz oder Opazität des mindestens einen Sichtschutzelements (S3).

6. Verfahren nach Anspruch 5, **dadurch gekennzeichnet, dass**
das Sichtschutzelement (20, 20') eine Größe eines Pixels haben oder einnehmen kann.

7. Steuereinrichtung (32), die **dadurch gekennzeichnet ist, dass**
sie dazu eingerichtet ist, ein Verfahren nach Anspruch 5 oder 6 durchzuführen, die Steuereinrichtung (32) vorzugsweise aufweisend eine Prozessoreinrichtung (34).

8. Anzeigevorrichtung (20, 20') nach einem Ansprüche 1 bis 4, **gekennzeichnet durch**
eine Steuereinrichtung (32) nach Anspruch 7.

9. Kraftfahrzeug (10), **dadurch gekennzeichnet, dass**
das Kraftfahrzeug (10) eine Anzeigevorrichtung (12) nach einem der Ansprüche 1 bis 4 oder 8, und/oder eine Steuereinrichtung (32) nach Anspruch 7 aufweist.

## Claims

1. Display device (12) for a motor vehicle (10), having:
- a first, flat display element (16) which is arranged in a first display plane of the display device (12), and
- at least one further, flat display element (17, 18), in each case arranged in a further display plane of the display device (12) and arranged, in a user's viewing direction, upstream of the first display element (16), wherein
- the at least one further display element (17, 18) forms with the first display element (16) a multi-layer combination of display elements (16, 17, 18), and
- the at least one further display element (17, 18) has in each case an at least partially transparent display surface (29, 30) and in each case has a privacy element (20, 20') for setting a degree of transparency of at least one region of the display element (17, 18),
**characterised in that** the privacy element (20, 20') is designed as a switchable foil.

2. Display device (12) according to claim 1, **characterised in that**
the respective privacy element (20, 20') is arranged in the viewing direction behind or below the respective display surface (29, 30).

3. Display device (12) according to any one of the preceding claims, **characterised in that**
the respective privacy element (20, 20') is arranged to switch between a transparent state and an opaque state.

4. Display device (12) according to any one of the preceding claims, **characterised in that**
the display device (12) has at least two further display elements (17, 18).

5. Method of operating a display device (12) according to any one of claims 1 to 4, the method **characterised by** the following steps performed by a control device (32):
- generating an image control signal (S1) describing an image with at least two image elements, wherein one of the at least two image elements is to be displayed by one of the display elements (16), and wherein another of the at least two image elements is to be displayed by another of the display elements (17, 18),
- adjusting, in dependence on the generated image control signal, a degree of transparency of at least one privacy element (20, 20', S2), and
- outputting the image control signal and thereby displaying the respective image element on the respective display element and adjusting a transparency or opacity of the at least one privacy element (S3).

6. Method according to claim 5, **characterised in that**
the privacy element (20, 20') has or can assume a dimension of a pixel.

7. Control device (32), that is **characterised in that**
it is adapted to perform a method according to claim 5 or 6, the control device (32) preferably having a processor unit (34).

8. Display device (20, 20') according to any one of claims 1 to 4, **characterised by**
a control device (32) according to claim 7.

9. Motor vehicle (10), **characterised in that**
the motor vehicle (10) has a display device (12) according to one of claims 1 to 4 or 8, and/or a control device (32) according to claim 7.

## Revendications

1. Dispositif d'affichage (12) pour un véhicule automobile (10) présentant :
- un premier élément d'affichage (16) plat qui est agencé dans un premier plan d'affichage du dispositif d'affichage (12), et
- au moins un autre élément d'affichage (17, 18) plat qui est agencé respectivement dans un autre plan d'affichage du dispositif d'affichage (12) et est agencé en amont du premier élément d'affichage (16) dans un sens de vue d'un utilisateur, dans lequel
- l'au moins un autre élément d'affichage (17, 18) forme avec le premier élément d'affichage (16) une combinaison à plusieurs couches d'éléments d'affichage (16, 17, 18), et
- l'au moins un autre élément d'affichage (17, 18) présente respectivement une surface d'affichage (29, 30) au moins partiellement transparente et respectivement un élément de protection de regard (20, 20') pour le réglage d'un degré d'une transparence au moins d'une zone de l'élément d'affichage (17, 18), **caractérisé en ce que**
l'élément de protection de regard (20, 20') est configuré comme film commutable.

2. Dispositif d'affichage (12) selon la revendication 1, **caractérisé en ce que**
l'élément de protection de regard (20, 20') respectif est agencé dans le sens du regard derrière ou sous la surface d'affichage (29, 30) respective.

3. Dispositif d'affichage (12) selon l'une quelconque des revendications précédentes, **caractérisé en ce que**
l'élément de protection de regard (20, 20') respectif est conçu afin de passer entre un état transparent et un état opaque.

4. Dispositif d'affichage (12) selon l'une quelconque des revendications précédentes, **caractérisé en ce que**
le dispositif d'affichage (12) présente au moins deux autres éléments d'affichage (17, 18).

5. Procédé de fonctionnement d'un dispositif d'affichage (12) selon l'une quelconque des revendications 1 à 4, le procédé étant **caractérisé par** les étapes suivantes réalisées par un dispositif de commande (32) :
- la génération d'un signal de commande d'image (S1) qui décrit une image avec au moins deux éléments d'image, dans lequel un des au moins deux éléments d'image est à afficher par un des éléments d'affichage (16), et dans lequel un autre des au moins deux éléments d'image est à afficher par un autre des éléments d'affichage (17, 18),
- en fonction du signal de commande d'image généré le réglage d'un degré de transparence au moins d'un élément de protection de regard (20, 20', S2), et
- la sortie du signal de commande d'image et ainsi l'affichage de l'élément d'image respectif sur l'élément d'affichage respectif et le réglage d'une transparence ou opacité d'au moins un élément de protection de regard (S3).

6. Procédé selon la revendication 5, **caractérisé en ce que**
l'élément de protection de regard (20, 20') peut présenter ou peut occuper une grandeur d'un pixel.

7. Dispositif de commande (32) qui est **caractérisé en ce que**
il est conçu afin de réaliser un procédé selon la revendication 5 ou 6, le dispositif de commande (32) présentant de préférence un dispositif à processeur (34).

8. Dispositif d'affichage (20, 20') selon l'une quelconque des revendications 1 à 4, **caractérisé par**
un dispositif de commande (32) selon la revendication 7.

9. Véhicule automobile (10), **caractérisé en ce que**
le véhicule automobile (10) présente un dispositif d'affichage (12) selon l'une des revendications 1 à 4 ou 8, et/ou un dispositif de commande (32) selon la revendication 7.
